# EUROPEAN PATENT APPLICATION

(11) **EP 1 626 510 A2**
(43) Date of publication of application: **15.02.2006**
(21) Application number: 05076865.4
(22) Date of filing: 10.08.2005
(51) Int. Cl.: H04B 7/005

(54) **Mobile communication system and downlink transmission power control method thereof**

(30) Priority: 10.08.2004 JP 2004233457
(71) Applicant: NEC CORPORATION, Minato-ku, Tokyo 108-01 (JP)
(72) Inventor: Innami, Takaharu, Nec Corporation, Minato-ku, Tokyo (JP)
(74) Representative: Wenzel & Kalkoff

(57) **Abstract**

Base stations concerned with soft hand-over with respect to a mobile terminal notify sums of control values to a wireless network controller at intervals of the predetermined number of frames. In each base station, the control values are obtained by decoding common transmission power control signals transmitted by the mobile terminal at intervals of a time slot shorter than the frame. The mobile terminal notifies ratios of signal power to noise power regarding common pilot signals transmitted by the base stations. The wireless network controller selects one of the base stations as a reference station according to the ratios of signal power to noise power. The wireless network controller instructs the base stations to match transmission power of the base station(s) other than the reference station to that of the reference station.

## Description

### BACKGROUND OF THE INVENTION:

This invention relates to a mobile communication system, in particular, to a downlink transmission power control method of a wideband code division multiple access (W-CDMA) mobile communication system.

In a mobile communication system employing code division multiple access (CDMA), a plurality of base stations and a plurality of mobile terminals use a common frequency band. Accordingly, transmission power control is necessary to suppress interference.

A known transmission power control method adopts a combination of an inner loop control, which brings a reception SIR (Signal to Interference Ratio) close to a target SIR, and an outer loop control, which updates the target SIR according to receiving quality. Such a transmission power control method is disclosed in Unexamined Japanese Patent Publication No. 2003-78484.

In the inner loop control, a receiving end (i.e. a base station or a mobile terminal) measures the reception SIR to compare a measured SIR with the target SIR. The receiving end produces a (downlink or uplink) transmission power control (TPC) command signal according to the comparison result and transmits it to a transmitting end (i.e. the mobile terminal or the base station) to change transmission power of the transmitting end and to bring the reception SIR close to the target SIR. The transmitting end periodically receives the TPC command signal in a slot cycle (e.g. 0.667 ms) and changes the transmission power by a predetermined step unit [dB] in response to the TPC command signal.

On the other hand, in the outer loop control, the receiving end monitors communication quality (i.e. measures a bit error rate or a block error rate) in a predetermined cycle and changes the target SIR to maintain desired communication quality. Change of the target SIR means change of a reference value for producing the TPC signal. In consequence, it is possible to reduce/increase the transmission power of the transmitting end by changing the target SIR according to good/bad communication quality. The target SIR is further used as a reference value for transmitting power of the receiving end. When the communication quality is good, the target SIR is reduced and thereby the transmission power of the receiving end is reduced. Thus, frequency resources are efficiently used and communication capacity of the system increases. To the contrary, when the communication quality is bad, the target SIR is increased to improve the communication quality.

The mobile communication system of this type performs soft hand-over when the mobile terminal moves from an existing cell to an adjacent cell. During the soft hand-over, the mobile terminal communicates with two or more base stations covering the existing cell and the adjacent cell(s) at the same time. In such a case, downlink transmission power of the base stations concerned with the soft hand-over must be controlled to be equal to each other.

Another known transmission power control method is to equalize the downlink transmission power of the base stations concerned with the soft hand-over to each other. The method uses a wireless network controller connected to all of the base stations. The wireless network controller collects necessary information from the base stations communicating with the mobile terminal to produce a downlink transmission power control information signal. The wireless network controller broadcasts the downlink transmission power control information signal to the base stations concerned with the soft hand-over for the mobile terminal.

Such a transmission power control method is disclosed in Unexamined Japanese Patent Publication No. 2000-224102.

As mentioned above, the (former) known transmission power control method adopts both the inner loop control and the outer loop control. When the method is used for the downlink transmission power control, the mobile terminal employs the inner loop control using the target SIR to produce the TPC command signal and the outer loop control to update the target SIR according to the communication quality. Because the target SIR is used as the reference value for settling the transmission power of the mobile terminal, change of the target SIR affects the transmission power of the TPC command signal transmitted from the mobile terminal.

If the mobile terminal reduces the target SIR because of the good quality of communication with the base station, the transmission power of the TPC command signal transmitted from the mobile terminal to the base station is reduced. Consequently, in the base station, decoding error rate for the TPC command signal becomes large.

When the TPC command signal is mistakenly decoded in the base station, the downlink transmission power deviates from a desired power desired by the mobile terminal. The mistaken variation of the downlink transmission power is not a problem as far as the mobile terminal communicates with the only base station. This is because the mistaken variation is corrected by the following TPC command signal(s).

On the other hand, when the mobile terminal communicates with plural base stations, the mistaken variation becomes a problem. Specifically, when the soft hand-over is executed, the TPC command signal is transmitted to the base stations concerned with the soft hand-over in common. The base stations individually decode the TPC command signal. The decoding error regarding the TPC command signal in each base station is independent of that in the other base station(s). Accordingly, it is probable that a certain base station increases the downlink transmission power according to the TPC command signal while another certain base station reduces the downlink transmission power according to the same TPC command signal. The difference of the downlink transmission power between the base stations concerned with the soft hand-over will not be corrected by the following TPC command signal(s). In theory, there is a case where a succeeding decoding error regarding a succeeding TPC command signal in any base stations cancels the difference of the downlink transmission power between the base stations. However, in practice, the succeeding decoding error often enlarges the difference of the downlink transmission power between the base stations concerned with the soft hand-over. In the long view, there is a high possibility that the difference of the downlink transmission power between the base stations concerned with the soft hand-over is enlarged with time. Accordingly, the mobile terminal can not receive a downlink signal from any base stations concerned with the soft hand-over with sufficient receiving power. Therefore, a connection for the mobile terminal is forcibly released. In other words, unintended call clearing is made regarding the mobile terminal.

By way of example, the description will be made about a case where the mobile terminal moves from a first cell covered by a first base station to a second cell covered by a second base station. If the downlink transmission power of the first base station is equal to that of the second base station, a receiving power at the mobile terminal depends on a distance from the mobile terminal to each base station. Accordingly, at first, since the mobile terminal is nearer the first base station than the second base station, first receiving power for a first downlink signal transmitted from the first base station is larger than second receiving power for a second downlink signal transmitted from the second base station. As the mobile terminal comes close to the second base station, the first receiving power is reduced and the second receiving power is increased. When the mobile terminal further comes close to the second base station, the second receiving power becomes larger than the first receiving power. If the second receiving power reaches sufficient power, the soft hand-over is finished.

Now, it is assumed that the first and/or the second base stations mistakenly decode the TPC command signals and thereby the first transmission power becomes large while the second transmission power becomes small. In this situation, there is a case where the first receiving power remains larger than the second receiving power even if the mobile terminal moves to the second cell from the first cell. In such a case, neither the first downlink signal nor the second downlink signal with sufficient receiving power is received by the mobile terminal. Therefore, the mobile terminal loses the downlink signals and the call is cleared.

As mentioned above, the (former)known method has the disadvantage that forced call clearing is caused by mistaken decoding of the TPC signal at any base station when soft hand-over is executed.

The other (latter) known method using a wireless network controller is useful to start the soft hand-over. However, the method does not consider about the mistaken decoding for the TPC signal during the soft hand-over.

### SUMMARY OF THE INVENTION:

It is therefore an object of this invention to provide a mobile communication system capable of correcting difference of transmission power between base stations concerned with soft hand-over and a downlink transmission power control method therefor.

Other objects of this invention will become clear as the description proceeds.

According to a first aspect of this invention, a mobile communication system comprises a plurality of base stations for performing soft hand-over with respect to a mobile terminal. A wireless network controller is connected to the base stations for controlling the base stations. The base stations individually control downlink transmission power of the base stations according to common transmission power control signals periodically transmitted from the mobile terminal at intervals of a first predetermined time. The mobile system further comprises transmission power correcting means for periodically correcting the downlink transmission power of the base stations to be equal to each other at intervals of a second predetermined time longer than the first predetermined time.

According to a second aspect of this invention, a method for controlling downlink transmission power in a mobile communication system including a plurality of base stations for performing soft hand-over with respect to a mobile terminal, and a wireless network controller connected to the base stations for controlling the base stations, the method comprises the steps of: individually controlling downlink transmission power of the base stations according to common transmission power control signals periodically transmitted from the mobile terminal at intervals of a first predetermined time; and periodically correcting the downlink transmission power of the base stations to be equal to each other at intervals of a second predetermined time longer than the first predetermined time.

According to a third aspect of this invention, a base station is for use in a mobile communication system having a wireless network controller to be connected to the base station. The base station comprises transmission power controlling means for controlling downlink transmission power according to common transmission power control signals periodically transmitted from a mobile terminal concerned with soft hand-over at intervals of a first predetermined time. Notifying means is for periodically notifying a sum of control values dependent on the common transmission power control signals to the wireless network controller at intervals of a second predetermined time longer than the first predetermined time. Transmission power correction performing means is for correcting the downlink transmission power according to a correction instructing signal produced by the wireless network controller based on the sum of the control values.

According to a fourth aspect of this invention, a wireless network controller is for use in a mobile communication system having a plurality of base stations to be connected to the wireless network controller. The base stations are capable of performing soft hand-over with respect to a mobile terminal. The wireless network controller comprises receiving means for receiving notifications, each of which represents a sum of control values dependent on common transmission power control signals transmitted by the mobile terminal in each of the base stations, from the base stations concerned with the soft hand-over at predetermined intervals. Correction instructing means is for instructing the base stations concerned with the soft hand-over to equalize downlink transmission power of the base stations in response to the notifications.

### BRIEF DESCRIPTION OF THE DRAWINGS:

Fig. 1 is a schematic diagram illustrating a configuration of a W-CDMA wireless network system according to a preferred embodiment of this invention;
Fig. 2 is a block diagram illustrating a configuration of a wireless network controller included in the system of Fig. 1;
Fig. 3 is a block diagram illustrating a configuration of a base station included in the system of Fig. 1;
Fig. 4 is a graph illustrating an example of a relationship between time variation of a TPC command signal and downlink transmitting power of the base station;
Fig. 5 is a graph illustrating an example of variation of downlink transmitting power of base stations in a case where no correction is made during hand-over between the base stations;
Fig. 6 is a graph illustrating an example of variation of downlink transmitting power of the base stations in a case where correction is made during the hand-over between the base stations;
Fig. 7 is a flowchart illustrating an operation, for notifying a TPC sum, of a control unit of the base station;
Fig. 8 is a flowchart illustrating a correction instructing operation of a controller of the wireless network controller;
Fig. 9 is a diagram illustrating a relationship between positions of a mobile terminal and the base stations and Ec/No value of PCPICH signal; and
Fig. 10 is a flowchart illustrating a downlink transmission power correcting operation of the base station.

### DESCRIPTION OF THE PREFERRED EMBODIMENT

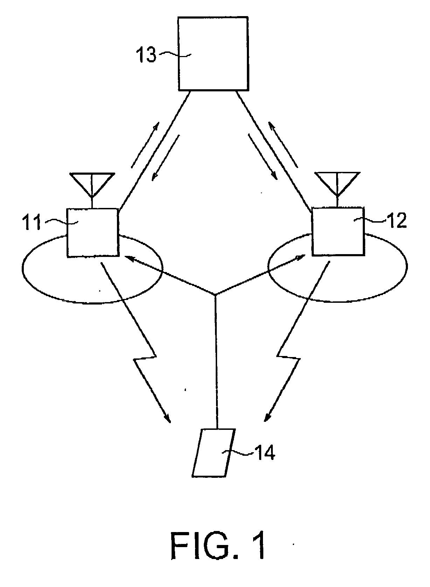

Referring to Figs. 1 to 10, description will be made about a mobile communication system according to a preferred embodiment of this invention.

Fig. 1 is a schematic diagram of a wideband code division multiple access (W-CDMA) wireless network system as the mobile communication system. In Fig. 1, the network system includes a plurality of base stations (only two shown) 11 and 12, a wireless network controller 13 connected to the base stations 11 and 12 through asynchronous transfer mode (ATM) lines and at least one mobile terminal 14 connectable with the base stations 11 and 12 through wireless connections based on the W-CDMA wireless access system.

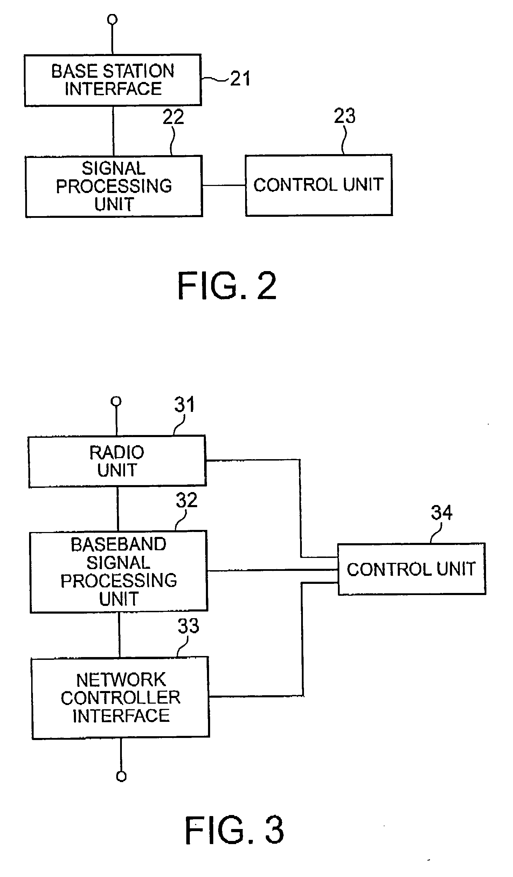

As illustrated in Fig. 2, the wireless network controller 13 has a base station interface 21 to be connected to the base stations 11 and 12, a signal processing unit 22 for processing signals from the base station 11 and 12, and a control unit 23 for controlling an operation of the whole of the wireless network controller 13. The control unit 23 serves as correction instructing means which is a part of the transmission power correcting means. Though the wireless network controller 13 has components other than the above-mentioned, they are unrelated to this invention and omitted from the diagram and the description.

As shown in Fig. 3, each of the base stations 11 and 12 includes a radio unit 31, a baseband signal processing unit 32, a network controller interface 33 and a control unit 34. The control unit 34 serves as notifying means which is a part of the transmission power correcting means.

The mobile terminal 14 is similar to a known mobile terminal. The configuration of the mobile terminal 14 is unrelated to this invention and omitted from the diagram and the description.

Next, the description proceeds to a downlink transmission power control operation of the wireless network system of Fig. 1.

Firstly, description will be made about a case where the mobile terminal 14 communicates with only one base station (here, it is assumed the base station 11).

The mobile terminal 14 produces an uplink TPC command signal by means of a known method and incorporates it as TBC command bits into an uplink transmission signal. The mobile terminal 14 then transmits the uplink transmission signal to the base station 11.

The control unit 34 of the base station 11 increases/reduces the downlink transmission power by a predetermined step unit according to the TPC command bits incorporated in a received signal.

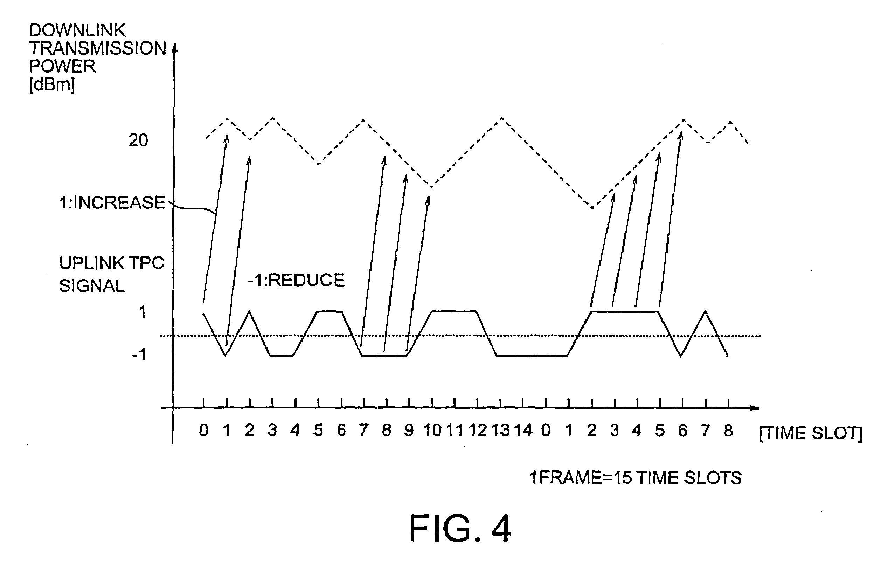

Fig. 4 shows an example of a relationship between time variation of the uplink TPC command signal and the downlink transmission power.

In Fig. 4, the horizontal axis indicates time [Time Slot] (1 [Time slot]=0.667 [ms], 1 [Frame]=10 [ms]=15 [Time slot]). On the other hand, the vertical axis indicates control value ((+)1 or -1) represented by the uplink TPC command signal, and the downlink transmission power [dBm]. Here, it is assumed that an initial value of the downlink transmission power is equal to 20 [dBm]. In addition, it is assumed that the downlink transmission power is increased/reduced by 1 [dBm] in the next time slot timing when the TPC command signal represents "(+)1/-1".

As illustrated in Fig. 4, the control value represented by the uplink TPC command signal changes in order of "1, -1, 1, -1, -1, 1, 1, -1, -1, -1, 1, 1, 1, -1, -1, -1, -1, 1, 1, 1, 1, -1, 1 and -1". According to the change of the uplink TPC command signal, the downlink transmission power changes in order of "20 (Initial value), 21, 20, 21, 20, 19, 20, 21, 20, 19, 18, 19, 20, 21, 20, 19, 18, 17, 18, 19, 20, 21 and 20 [dBm]".

Next, description will be made about the case where the mobile terminal 14 communicates with plural base stations or where the soft hand-over is performed. Herein, it is assumed that the mobile terminal 14 communicates with the base stations 11 and 12 during the soft hand-over. However, there is a case where the mobile terminal 14 communicates with three or more base stations during the soft hand-over in practice.

For reference, the description is directed to the case where the wireless network controller 13 does not produce a correction instructing signal.

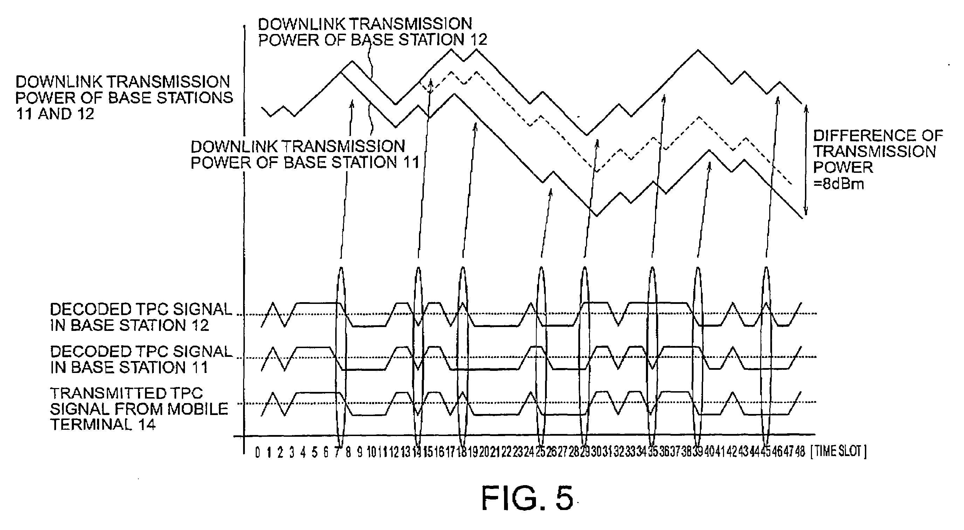

Fig. 5 shows an example of changes of the downlink transmission power of the base stations 11 and 12 in the case where decoding errors regarding the TPC command signals, which are transmitted from the mobile terminal 14, individually occur in the base stations 11 and 12.

In Fig. 5, the horizontal axis indicates time [Time slot]. The vertical axis indicates control value ((+)1 or -1) represented by the uplink TPC command signal and the decoded TPC command signals individually decoded by the base stations 11 and 12, and the downlink transmission power [dBm] of the base station 11 and 12.

As shown by combinations of ellipses and arrows, decoding errors occur at the fourteenth, twenty-ninth, thirty-fith and forty-fith time slots in the base station 11. Furthermore, as shown by the other combinations of ellipses and arrows, decoding errors occur at at the seventh, eighteenth, twenty-fifth, and thirty-ninth time slots in the base station 12. Consequently, at the forty-eighth time slot, there is a difference of the downlink transmission power which is equal to 8 [dBm] between the base stations 11 and 12. If the decoding errors do not occur in both of the base stations 11 and 12, there is no difference of the downlink transmission power between the base stations 11 and 12. In such a case, the downlink transmission power of the base stations 11 and 12 varies as illustrated by a broken line in Fig. 5.

The base stations 11 and 12 individually make errors in decoding the TPC command signals. Accordingly, it is rare that the decoding errors occur in both of the base stations 11 and 12 at the same time. When one of the base stations 11 and 12 makes a decoding error regarding the TPC command signal, it increases (or reduces) the downlink transmission power by 1 [dBm] while the other base station reduces (or increases) the downlink transmission power by 1 [dBm]. Thus, the difference of the downlink transmission power between the base stations 11 and 12 is changed by 2 [dBm] whenever either base station 11 or 12 makes a decoding error regarding the TPC command signal.

It is indefinite whether the difference of the downlink transmission power is increased or reduced. For example, the difference of 2 [dBm] will be changed into 4 [dBm] or 0 [dBm] by the following decoding error caused in either one of the base stations 11 and 12. Though the difference is equal to 8 [dBm] after the eighth error in Fig. 5, it is possible to be equal to 16 [dBm] at the maximum after the eighth error.

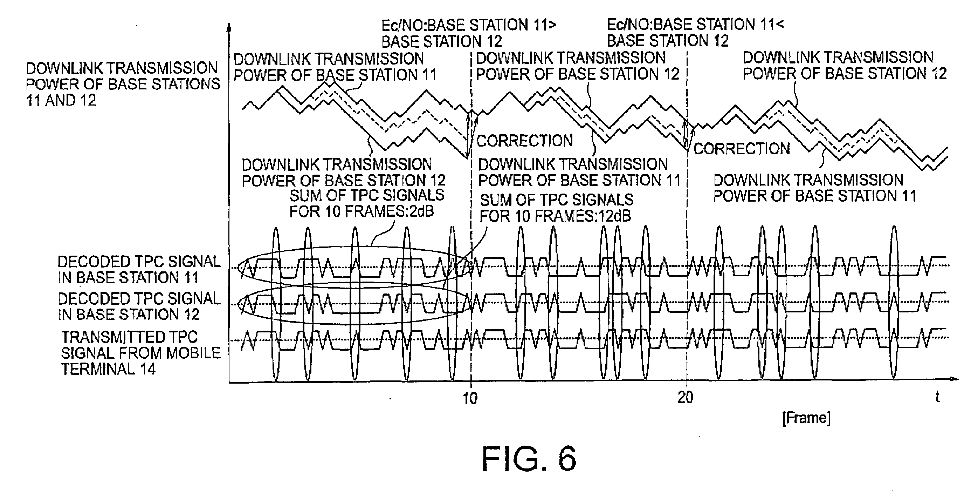

There is a high probability that the difference of the downlink transmission power, during the soft hand-over, gradually becomes larger with time elapse. Thus, the wireless network system of this embodiment matches the downlink transmission power of the base stations concerned with the soft hand-over to each other at predetermined regular intervals. In other words, the system periodically equalizes the downlink transmission power of the base stations concerned with the soft hand-over in a predetermined cycle. Referring to Figs. 6 to 10, the description proceeds to an operation of the downlink transmission power control including the correction for matching the downlink transmission power of the base stations at regular intervals.

Fig. 6 shows an example of changes of the downlink transmission power of the base stations 11 and 12 similarly as for Fig. 5. In Fig. 6, the horizontal axis indicates time [Frame]. The vertical axis indicates control value ((+)1 or -1) represented by the uplink TPC command signal and the decoded TPC command signals individually decoded by the base stations 11 and 12, and the downlink transmission power [dBm] of the base station 11 and 12.

The base stations 11 and 12 are connected to the mobile terminal 14 by radio while they execute the inner loop power control. The mobile terminal 14 transmits common uplink TPC command signals to the base stations 11 and 12 at time slot intervals. Each of the uplink TPC command signals represents the control value of "1" or "-1". Each of the base stations 11 and 12 decodes the uplink TPC command signal received at each time slot to control the downlink transmission power thereof. When the decoded uplink TPC command signal represents "1/-1", each of the base stations 11 and 12 increases/reduces the downlink transmission power by 1 [dBm]. Thus, the control unit 34 of each base station serves as transmission power controlling means.

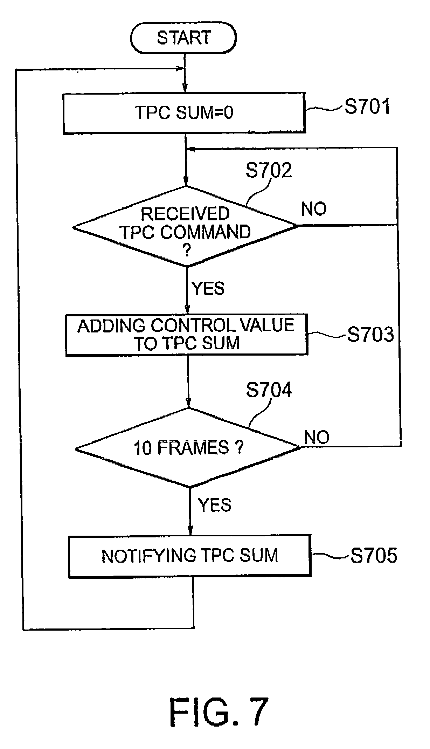

In addition to the operation mentioned above, the control unit 34 of each of the base stations 11 and 12 operates as illustrated in Fig. 7. That is, the control unit 34 further serves as notifying means.

At first, the control unit 34 brings a TPC sum back to zero (Step S701).

When the uplink TPC command signal is received (Yes, Step S702), the control unit 34 add the contorl value ("+1" or "-1") represented by the decoded TPC command signal corresponding to the received uplink TPC command signal to the TPC sum (Step S703).

The steps of S702 and S703 are repeated for the predetermined number of frames (here, ten frames). If the TPC command signals of the predetermined number of frames are received (Yes, Step S704), the control unit 34 notifies the wireless network controller 13 of the TPC sum (Step S705).

After that, the control unit 34 repeats the above-mentioned operation (Step S701-S704) and periodically notifies the wireless network controller 13 of the TPC sum at intervals of predetermined frames.

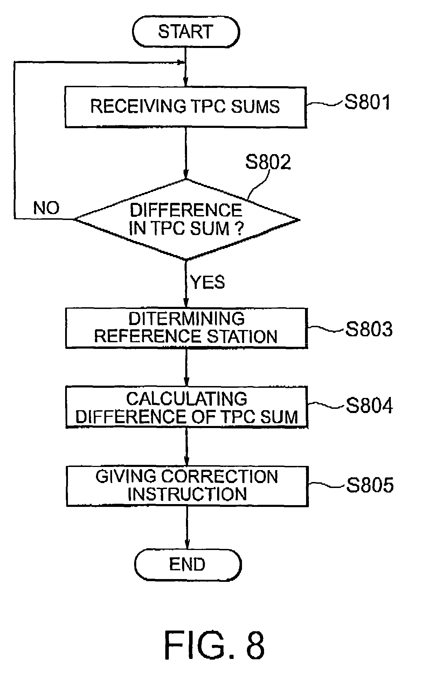

On the other hand, the control unit 23 of the wireless network controller 13 operates as illustrated in Fig. 8. That is, the control unit 23 serves as receiving means and correction instructing means as follows.

The control unit 23 receives the TPC sums notified from the base stations 11 and 12 concerned with the soft hand-over (Step S801) to memorize them.

Next, the control unit 23 judges whether there is a difference between the TPC sums notified from the base stations 11 and 12 or not (Step S802).

When there is no difference between the TPC sums notified from the base stations 11 and 12, the step S802 returns to the step S801 to wait for the following notification of the TPC sums.

When there is a difference between the TPC sums notified from the base stations 11 and 12 (Yes, Step S802), the control unit 23 selects one of the base stations 11 and 12 as a reference station (Step S803).

If three or more base stations are concerned with the soft hand-over and the TPC sums notified from the base stations are unequal, the control unit 23 selects one of the base stations as the reference station similarly as for the case where two base stations are concerned with the soft hand-over.

The selection of the reference station may be made by a known method. For instance, the control unit 23 may select the base station connected to the mobile terminal before a beginning of the soft hand-over. Alternatively, the reference station may select the base station lastly connected to the mobile terminal to perform the soft hand-over. In this embodiment, the control unit 23 selects the reference station according to a ratio of signal power (or carrier energy) to noise power (Ec/No) for a primary common pilot channel (PCPICH) signal broadcast from each base station.

Each of the base stations 11 and 12 continuously broadcasts the PCPICH signal at a fixed transmission power. The mobile terminal 14 receives the PCPICH signals broadcast from the base stations 11 and 12 to determine the Ec/No values of the PCPICH signals. The mobile terminal 14 notifies the determined Ec/No values to the wireless network controller 13 through the base station 11 or 12. The notification of the Ec/No values is made when the mobile terminal 14 either adds or deletes a connection with a base station.

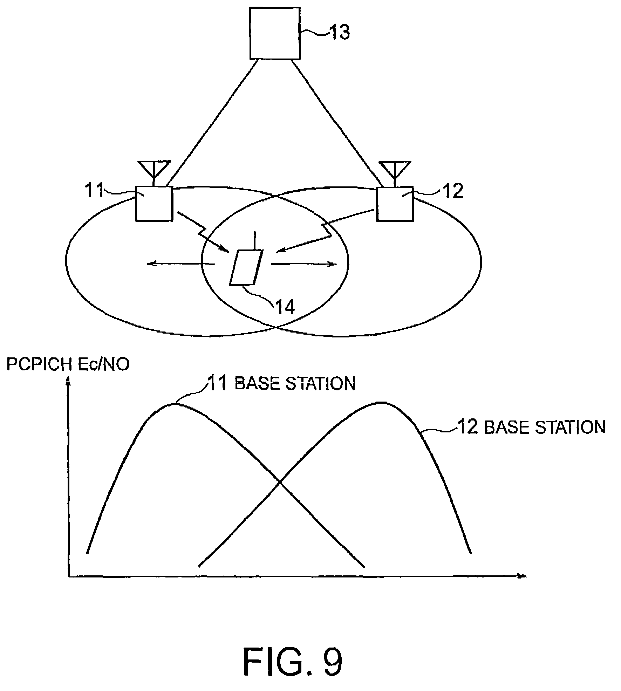

The Ec/No value depends on an interval between the mobile terminal 14 and each base station because the PCPICH signal is broadcast from each of the base stations 11 and 12 at the fixed transmission power. If the physical relationship between the mobile terminal 14 and the base stations 11 and 12 is as shown in the upper part of Fig. 9, the Ec/No values determined by the mobile terminal 14 are as shown in the lower part of Fig. 9. In the lower part of Fig. 9, a left curve shows the Ec/No value for the PCPICH signal from the base station 11 while a right curve shows the Ec/No value for the PCPICH signal from the base station 12. As shown in Fig. 9, the Ec/No value is increased with reduction of the interval between the mobile terminal 14 and the base stations (11 or 12). Inversely, the Ec/No value is reduced with increase of the interval between the mobile terminal 14 and the base stations (11 or 12).

The control unit 23 of the wireless network controller 13 receives the Ec/No values determined by the mobile terminal 14 through the base stations 11 or 12 to compare them with each other. The control unit 23 selects one of the base stations 11 and 12 that corresponds to a larger Ec/No value as the reference station. This is due to avoiding rapid variation of the transmitting power of a main data signal. The main data signal is decided by the mobile terminal 14. That is, the mobile terminal 14 selects a data channel (DCH) signal transmitted by the base station corresponding to the larger Ec/No value as the main data signal. When the three or more base stations are concerned with the soft hand-over, the control unit 23 selects one of the base stations that corresponds to the largest Ec/No value as the reference station.

Returning to Fig. 8, the control unit 23 finds the difference between the TPC sum corresponding to the reference station and the TPC sum corresponding to the other base station (Step S804).

Lastly, the control unit 23 produces and transmits a correction instructing signal to correct the downlink transmission power of the other base station (Step S805).

In the example of Fig. 6, decoding errors occur five times during the first ten frames (i.e. 150 [Time slot]=100 [ms]). In this event, the base stations 11 and 12 notify the TPC sums of "-2" and "-12" to the wireless network controller 13, respectively. The difference between TPC sums of the base station 11 and 12 is equal to "10". Thus, a difference of the downlink transmission power between the base stations 11 and 12 is equal to 10 [dBm]. Because the base station 11 is selected as the reference station according to the Ec/No values corresponding to the base stations 11 and 12, the wireless network controller 13 supplies the correction instructing signal to the base station 12 so that the downlink transmission power thereof matches with that of the base station 11. That is, the wireless network controller 13 gives the correction instruction to the base station 12 to increase the downlink transmission power by 10 [dBm].

During the second ten frames, decoding errors occur five times likely as for the first ten frames. After the second ten frames, the TPC sums of the base stations 11 and 12 are equal to "-9" and "-3", respectively. Then, the difference of the downlink transmission power between the base stations 11 and 12 is equal to 6 [dBm]. In this time, because the base station 12 is selected as the reference station, the wireless network controller 13 supplies the correction instructing signal to the base station 11 so that the downlink transmission power thereof matches with that of the base station 12. That is, the wireless network controller 13 gives the correction instruction to the base station 11 to increase the downlink transmission power by 6 [dBm].

If three or more base stations are concerned with the soft hand-over, the wireless network controller 13 gives correction instructions to the base stations other than the reference station to increase or decrease their transmission power and to match them with that of the reference station.

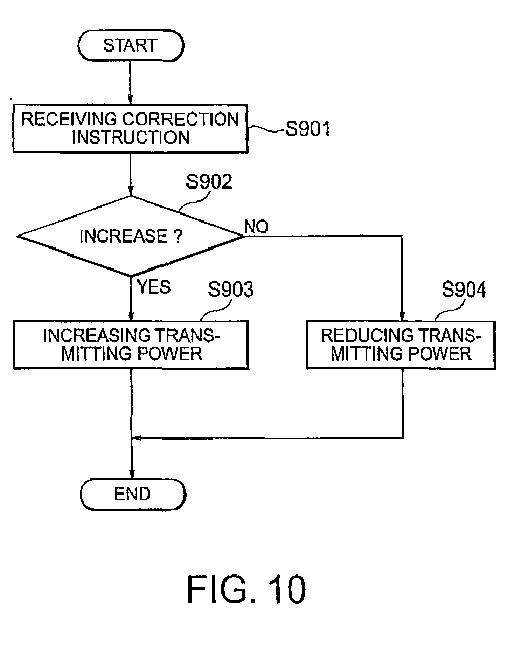

On receiving the correction instructing signal from the wireless network controller 13, the control unit 23 of each base station operates as illustrated in Fig. 10. That is, the control unit 23 serves as transmission power correction performing means as follows.

At first, the control unit 23 receives the correction instructing signal from the wireless network controller 13 (Step S901).

Next, the control unit 23 judges whether the correction instructing signal represents increase or reduction (Step S902).

When the correction instructing signal represents increase, the control unit 23 increases the downlink transmission power (Step S903). On the other hand, if the correction instruction represents reduction, the control unit 23 reduces the downlink transmission power (Step S904). Thus, the downlink transmission power of the base station(s) other than the reference station is matched with that of the reference station.

As mentioned above, in the wireless network system of this embodiment, the downlink transmission power of the base stations concerned with the soft hand-over is periodically corrected to match with each other at regular intervals. That is, the downlink transmission power is equalized between the base stations concerned with the soft hand-over in a predetermined cycle.

Furthermore, it is possible to match the downlink transmission power of the base stations with each other without rapidly varying the transmission power of the main data signal. This is because the correction is made by changing the downlink transmission power of the base station(s) corresponding to a smaller Ec/No value.

If the downlink transmission power is significantly changed (e.g. 10 [dBm] at a time) by the correction in each base station, there is apprehension that communication with the mobile terminal concerned with the soft hand-over and/or the other mobile terminal(s) is adversely affected by the change of the downlink transmission power. Therefore, the variation, which is changed by a single correction, of the downlink transmission power may be limited into a predetermined value. Though the decoding error rate for the TPC command signal in each base station depends on the target SIR and radio environment, the variation of the decoding error rate for a short time, such as ten frames, is small. Consequently, a maximum correction value may be decided according to a determined decoding error rate determined in a steady state to have no or little effect on the communications.

While this invention has thus far been described in conjunction with the preferred embodiment thereof, it will readily be possible for those skilled in the art to put this invention into practice in various other manners. For example, each base station may transmit a signal representing magnitude of the downlink transmission power to the wireless network controller at regular intervals though the base station notifies the TPC sum as information related to the downlink transmitting power to the wireless network controller in the above mentioned embodiment.

## Claims

1. A mobile communication system comprising:
a plurality of base stations for performing soft hand-over with respect to a mobile terminal; and
a wireless network controller connected to said base stations for controlling said base stations;
wherein said base stations individually control downlink transmission power of said base stations according to common transmission power control signals periodically transmitted from said mobile terminal at intervals of a first predetermined time; and
wherein said mobile system further comprises transmission power correcting means for periodically correcting the downlink transmission power of said base stations to be equal to each other at intervals of a second predetermined time longer than the first predetermined time.

2. A mobile communication system according to Claim 1, said transmission power correcting means comprising:
notifying means provided in each of said base stations so that said base stations periodically supply notifications each of which represents a sum of control values dependent on the common transmission power control signals to said wireless network controller at intervals of the second predetermined time; and
correction instructing means provided in said wireless network controller for instructing said base stations to correct the downlink transmission power of said base stations according to the notifications.

3. A mobile communication system according to Claim 2, wherein said correction instructing means compares sums represented by the notifications with each other, and instructs said base stations to correct the downlink transmission power of said base stations when the sums represented by the notifications are unequal.

4. A mobile communication system according to Claim 2 or 3, wherein said correction instructing means selects one of said base stations as a reference station to match the downlink transmission power of said base stations other than said reference station to the downlink transmission power of said reference station.

5. A mobile communication system according to Claim 4, wherein said correction instructing means receives ratios of signal power to noise power regarding common pilot channel signals transmitted by said base stations from said mobile terminal to select said reference station according to the ratios.

6. A mobile communication system according to any one of Claims 1, 2, 3, and 5, comprising a code division multiple access system.

7. A method for controlling downlink transmission power in a mobile communication system including a plurality of base stations for performing soft hand-over with respect to a mobile terminal, and a wireless network controller connected to said base stations for controlling said base stations, said method comprising the steps of:
individually controlling downlink transmission power of said base stations according to common transmission power control signals periodically transmitted from said mobile terminal at intervals of a first predetermined time; and
periodically correcting the downlink transmission power of said base stations to be equal to each other at intervals of a second predetermined time longer than the first predetermined time.

8. A method according to Claim 7, wherein the correcting step comprises:
periodically supplying notifications, each of which represents a sum of control values dependent on the common transmission power control signals, from said base stations to said wireless network controller at intervals of the second predetermined time; and
instructing, from said wireless network controller, said base stations to correct the downlink transmission power of said base stations according to the sums represented by the notifications.

9. A method according to claim 8, further comprising the step of comparing the sums represented by the notifications with each other,
wherein the instructing step is performed when the sums represented by the notifications are unequal.

10. A method according to Claim 8 or 9, further compising the step of determining one of said base stations as a reference station,
wherein the instructing step is performed to match the downlink transmission power of said base stations other than said reference station to the downlink transmission power of said reference station.

11. A method according to Claim 10, further comprising the step of receiving ratios of signal power to noise power regarding common pilot channel signals transmitted by said base stations from said mobile terminal,
wherein the determining step is performed according to the ratios.

12. A method according to any one of Claims 7, 8, 9 and 11, wherein said mobile communication system comprises a code division multiple access system.

13. A base station for use in a mobile communication system having a wireless network controller to be connected to said base station, comprising:
transmission power controlling means for controlling downlink transmission power according to common transmission power control signals periodically transmitted from a mobile terminal concerned with soft hand-over at intervals of a first predetermined time;
notifying means for periodically notifying a sum of control values dependent on said common transmission power control signals to said wireless network controller at intervals of a second predetermined time longer than the first predetermined time; and
transmission power correction performing means for correcting the downlink transmission power according to a correction instructing signal produced by said wireless network controller based on the sum of the control values.

14. A wireless network controller for use in a mobile communication system having a plurality of base stations to be connected to said wireless network controller, said base stations being capable of performing soft hand-over with respect to a mobile terminal, said wireless network controller comprising:
receiving means for receiving notifications, each of which represents a sum of control values dependent on common transmission power control signals transmitted by said mobile terminal in each of said base stations, from said base stations concerned with the soft hand-over at predetermined intervals; and
correction instructing means for instructing said base stations concerned with the soft hand-over to equalize downlink transmission power of said base stations in response to the notifications.
